# EUROPÄISCHE PATENTANMELDUNG

(11) **EP 4 763 592 A1**
(43) Veröffentlichungstag der Anmeldung: **24.06.2026**
(21) Anmeldenummer: 25219684.5
(22) Anmeldetag: 01.12.2025
(51) Int. Cl.: B60L 53/16, B60L 53/30, E01C 11/22, H02G 9/04, H02G 9/10

(54) **VERSCHLUSSSYSTEM FÜR EIN LADESTECKERTEIL UND LADESYSTEM FÜR ELEKTRISCHE SPEICHER**

(30) Priorität: 12.12.2024 DE 102024137486
(71) Anmelder: Pierburg GmbH, 41460 Neuss (DE)
(72) Erfinder: Turan, Alper, 50969 Köln (DE); Sutty, Patrick, 40477 Düsseldorf (DE); Ozdyk, Björn, 41460 Neuss (DE); Paffrath, Holger, 50259 Pulheim (DE); Kohnen, Wolfgang, 52477 Alsdorf (DE); Holl, Daniel, 42549 Velbert (DE)
(74) Vertreter: Kirschner, Sebastian

(57) **Zusammenfassung**

Die Erfindung betrifft ein Verschlusssystem (1) für ein, insbesondere in einem Hohlraum (2) eines Bordsteinelementes (3) angeordnetes und/oder anordenbares, Ladesteckerteil (4), mit einer Klappe (5), einem Getriebemechanismus (6) und einem Aktuator (7), wobei die Klappe (5) mittels des Getriebemechanismus (6) mit dem Aktuator (7) derart gekoppelt ist, dass die Klappe (5) mittels des Aktuators (7) in einer Klappen-Ladeposition (KL) und einer Klappen-Verschlussposition (KV) positionierbar ist. Die Erfindung betrifft weiterhin ein zugehöriges Ladesystem (16) für elektrische Speicher (17).

Eine Systemkomplexität des Verschlusssystem (1) und des Ladesystems (16) ist verringert und/oder deren Bedienfreundlichkeit ist erhöht, indem ein Anschlag (8) vorhanden ist, wobei die Klappe (5), der Getriebemechanismus (6) und/oder der Aktuator (7) durch Positionierung der Klappe (5) in der Klappen-Verschlussposition (KV) mittels des Aktuators (7) durch den Anschlag (8) blockierbar und somit die Klappe (5) in ihrer Klappen-Verschlussposition (KV) sicherbar ist, wobei der Getriebemechanismus (6) ein Hebelelement (9) aufweist, wobei das Hebelelement (9) in einer Hebelelement-Verschlussposition (HV), in einer Hebelelement-Entriegelungsposition (HE) und in einer Hebelelement-Ladeposition (HL) mittels des Aktuators (7) positionierbar ist.

## Beschreibung

Die Erfindung betrifft ein Verschlusssystem für ein Ladesteckerteil mit den Merkmalen des Oberbegriffes des Patentanspruchs 1 und ein Ladesystem für elektrische Speicher mit einem solchen Verschlusssystem.

Im Zuge der fortschreitenden Elektrifizierung von Kraftfahrzeugen müssen im öffentlichen Raum eine Vielzahl von Ladesystemen für elektrische Speicher der dann als Elektrofahrzeuge ausgeführten Kraftfahrzeuge geschaffen werden. Solche elektrischen Speicher sind insbesondere als Akkumulatoren ausgeführt. Die Ladesysteme weisen u.a. ein Ladesteckerteil auf, mit welchem der elektrische Speicher mit einem Ladekabel verbindbar ist. Das Ladekabel weist dazu eine weiteres passendes Steckerteil auf. Das Ladesteckerteil ist zur Durchführung eines Ladevorganges des elektrischen Speichers mit einer Energiequelle, insbesondere über ein Stromnetzwerk, elektrisch verbunden.

Im Stand der Technik sind zur Realisierung solcher Ladesysteme sogenannte Ladesäulen bekannt, welche aufragend von einem befahr- bzw. begehbaren Untergrund angeordnet sind. Solche Ladesäulen nehmen aber einen großen Raum ein und stellen weiterhin ein Verkehrshindernis dar. Um solche Verkehrshindernisse zu vermeiden und den Platzbedarf der Ladesysteme zu verringern, ist es bekannt, Ladesysteme mit einem Bordsteinelement und mit dem Ladesteckerteil vorzusehen, wobei das Ladesteckerteil in einem Hohlraum des Bordsteinelementes angeordnet ist. Solche Ladesysteme mit Bordsteinelement können dann im öffentlichen Raum konventionelle Bordsteinelemente ohne Ladefunktion ersetzten, so dass durch das derartige Ladesystem kein zusätzlicher Platzbedarf und kein Verkehrshindernis entsteht. Der Hohlraum weist zumindest eine Öffnung auf, durch welche das Ladesteckerteil zur Verbindung mit dem Ladekabel zugänglich ist. Solche Ladesysteme u.a. mit dem Bordsteinelement und dem Ladesteckerteil werden auch als Bordsteinladegerät bezeichnet.

In solchen Ladesystemen wird die Öffnung des Hohlraums des Bordsteinelementes und somit das Ladesteckerteil, insbesondere eine entsprechende Ladebuchse, bei Nicht-Verwendung gegen Umwelteinflüsse, Vandalismus und zum Schutz gegen unbefugten Zugang mit einer Klappe eines Verschlusssystems abgedeckt. Solche Verschlusssysteme weisen weiterhin einen Getriebemechanismus und einen Aktuator auf, wobei die Klappe mittels des Getriebemechanismus mit dem Aktuator derart gekoppelt ist, dass die Klappe mittels des Aktuators in einer Klappen-Ladeposition und einer Klappen-Verschlussposition positionierbar ist.

Die Öffnung ist mittels der Klappe durch Positionierung der Klappe in ihrer Klappen-Verschlussposition verschließbar. Es ist ein bestimmter freier Öffnungsquerschnitt der Öffnung realisiert, wenn die Klappe in ihrer Klappen-Ladeposition positioniert ist. Der bestimmte freie Öffnungsquerschnitt der Öffnung ist so groß, dass eben ein Ladekabel, insbesondere dessen Stecker, durch die Öffnung zur Verbindung mit dem Ladesteckerteil hindurchführbar ist. Die Klappe muss gegen die oben genannten Risiken in ihrer Klappen-Verschlussposition mechanisch verriegelt werden und soll nur bei Nutzung des Bordsteinladegeräts vom Nutzer nach einer Autorisierung geöffnet und in ihrer Klappen-Ladeposition positioniert werden können. Nach dem Ende des Ladevorgangs und der Abmeldung des Nutzers soll ein Verschließen und Verriegeln der Klappe sichergestellt sein.

Es sind voneinander getrennte technische Mechanismen zur Umsetzung der Funktionen der Betätigung und der Verriegelung der Klappe bekannt, wobei mit der Betätigung der Klappe das Bewegen zwischen ihrer Klappen-Verschlussposition und ihrer Klappen-Ladeposition gemeint ist. Solche voneinander getrennten technischen Mechanismen erfordern einen hohen Aufwand, wodurch sich die Systemkomplexität und die Kosten erhöhen.

Weiterhin sind schwenkende oder herausfahrende Ladesteckerteile ohne eine separate Abdeckung bzw. Klappe bekannt. Aus Bodennähe schwenkende oder herausfahrende Ladesteckerteile sind aber höheren Risiken in Bezug auf Schmutz und Dichtheit ausgesetzt. Diese Risiken technisch zu beherrschen, ist extrem aufwändig.

Der Erfindung liegt daher die Aufgabe zugrunde, das Verschlusssystem für ein Ladesteckerteil und das Ladesystem für elektrische Speicher nun derart auszugestalten und / oder weiterzubilden, dass die Nachteile des Standes der Technik vermieden, zumindest aber verringert sind, wobei insbesondere eine Systemkomplexität des Verschlusssystem und des Ladesystems verringert und/oder deren Bedienfreundlichkeit erhöht werden sollen.

Diese der Erfindung zugrunde liegende Aufgabe wird nun zunächst durch Verschlusssystem für ein Ladesteckerteil mit den Merkmalen des Patentanspruchs 1 gelöst.

Ein Aspekt der Erfindung liegt zunächst im Wesentlichen darin, dass ein Anschlag vorhanden ist, wobei die Klappe, der Getriebemechanismus und/oder der Aktuator durch Positionierung der Klappe in der Klappen-Verschlussposition mittels des Aktuators durch den Anschlag blockierbar und somit die Klappe in ihrer Klappen-Verschlussposition sicherbar ist, wobei der Getriebemechanismus ein Hebelelement aufweist, wobei das Hebelelement in einer Hebelelement-Verschlussposition, in einer Hebelelement-Entriegelungsposition und in einer Hebelelement-Ladeposition mittels des Aktuators positionierbar ist, wobei das Hebelelement durch den Anschlag blockiert und somit die Klappe in ihrer Klappen-Verschlussposition gesichert ist, wenn das Hebelelement mittels des Aktuators in der Hebelelement-Verschlussposition positioniert ist, wobei das Hebelelement gegenüber dem Anschlag freigegeben und wobei die Klappe in ihrer Klappen-Verschlussposition positioniert ist, wenn das Hebelelement mittels des Aktuators in der Hebelelement-Entriegelungsposition positioniert ist, wobei die Klappe in ihrer Klappen-Ladeposition positioniert ist, wenn das Hebelelement mittels des Aktuators in der Hebelelement-Ladeposition positioniert ist.

Der Anschlag ist insbesondere als eine Art Vorsprung ausgebildet. Der Anschlag weist eine feste Position auf und ist nicht bewegbar, z.B. durch Ausbildung an und/oder durch feste Verbindung mit gehäuseartigen Elementen. Wenn jemand die Klappe unerlaubterweise öffnen will, wenn sich die Klappe in ihrer Klappen-Verschlussposition und das Hebelelement in der Hebelelement-Verschlussposition befindet, dann wird das Bewegen der Klappe durch Kontakt zwischen dem Hebelelement und dem Anschlag unterbunden. Ein in einem Gehäuse des Aktuators angeordneter Teil des Aktuators ist in eine Öffnungsrichtung bewegbar und entgegengesetzt in eine Schließrichtung bewegbar, insbesondere jeweils drehbar. Bei einer Aktivierung des Aktuators in Öffnungsrichtung ist vorteilhafterweise mit nur einer durchgehenden Bewegung zunächst die integrierte Verriegelung freigebbar und im Anschluss die Klappe öffenbar. Dabei wird das Hebelelement von der Hebelelement-Verschlussposition über die Hebelelement-Entriegelungsposition in die Hebelelement-Ladeposition bewegt, ohne dass das Hebelelement in der Hebelelement-Entriegelungsposition anhalten muss. Das Öffnen der Klappe bzw. "zugänglich Machen" des Ladesteckerteils, das Verschließen der Klappe und die Verriegelung mittels des Anschlages kann somit mit nur einem einzigen Aktuator erreicht werden. Somit ist die Systemkomplexität reduziert, was zu simpleren Einzelkomponenten und auch einem reduzierten Montageaufwand führt. Weiterhin sinken auch die Kosten des Verschlusssystems. Durch das Bewegen der Klappe in die Klappen-Ladeposition mittels des Aktuators kann im Vergleich zu einer manuell vom Kunden zu öffnenden Klappe eine höhere Kundenakzeptanz erreicht werden, da der Kunde so weniger Schritte selber durchführen muss und weiterhin offensichtlicher ist, welche Schritte dies sind.

Vorzugsweise weist der Aktuator eine Lageerfassung, insbesondere einen Drehgeber, auf. Somit kann dann das Bewegen des Hebelelementes besonders präzise durchgeführt werden.

Vorteilhafterweise weist der Getriebemechanismus eine Koppelstange auf. Das Hebelelement ist mit der Koppelstange in einem ersten Endbereich der Koppelstange unter Ausbildung einer Drehachse drehbar verbunden. Die Koppelstange ist in einem zweiten, dem ersten gegenüberliegenden Endbereich mit dem Aktuator verbunden. Somit ist auf einfache Weise ein Abstand zwischen dem Aktuator und dem Hebelelement überbrückbar. Weiterhin kann mittels der Stange und deren konstruktiven Ausgestaltung die mögliche Bewegung des Aktuators auf die gewünschte Bewegung des Hebelelements abgestimmt werden.

Weiter bevorzugt ist ein Rotor des, insbesondere als Elektromotor ausgeführten, Aktuators um eine Drehachse des Aktuators herum drehbar. Die Koppelstange ist in dem zweiten Endbereich exzentrisch zur Drehachse des Aktuators mit dem Rotor unter Ausbildung einer Drehachse drehbar verbunden.

Der Aktuator ist vorzugsweise als Elektromotor ausgeführt. Denkbar wäre aber theoretisch auch, einen linear beweglichen Aktuator vorzusehen. Dann ist die Koppelstange Teil eines solchen linear beweglichen Aktuators oder mit diesem linear beweglichen Aktuator verbunden. Grundsätzlich können auch wegen des Getriebemechanismus bewährte Aktuatoren mit geringem Ausfallrisiko genutzt werden.

In einer bevorzugten Ausführungsform des Verschlusssystems ist ein Hebelarm-Element mittels der Klappe ausgebildet und/oder mit der Klappe verbunden. Das Hebelarm-Element ist unter Ausbildung einer Drehachse drehbar mit dem Hebelelement verbunden. Ein Langloch ist in dem Hebelarm-Element oder dem Hebelelement ausgebildet, wobei ein an dem anderen dieser beiden Elemente angeordneter Mitnehmer in das Langloch eingreift.

Das Hebelarm-Element ist im Wesentlichen senkrecht zu der Klappe, insbesondere einer Oberseite der Klappe, ausgerichtet. Durch das Hebelarm-Element ist ein bestimmter, gewünschter Abstand zwischen der Drehachse zwischen dem Hebelelement und dem Hebelarm-Element einerseits und dem Langloch und dem Mitnehmer andererseits realisierbar. Das Langloch ist vorzugsweise bogenförmig ausgeführt. Ein Mittelpunkt dieser Bogenform ist dann bevorzugt durch die Drehachse zwischen dem Hebelelement und dem Hebelarm-Element ausgebildet. Durch den Mitnehmer und das Langloch ist ein Bewegen des Hebelelements zwischen seiner Hebelelement-Verschlussposition und seiner Hebelelement-Entriegelungsposition ermöglicht, ohne dass sich das Hebelarm-Element bzw. die Klappe bewegt.

In einer weiteren, vorteilhaften Ausführungsform des Verschlusssystems ist der Mitnehmer in einem der Koppelstange abgewandten Endbereich des Langlochs angeordnet, wenn das Hebelelement in der Hebelelement-Verschlussposition positioniert ist. Der Mitnehmer ist in einem der Koppelstange zugewandten Endbereich des Langlochs angeordnet, wenn das Hebelelement in der Hebelelement-Entriegelungsposition positioniert ist. Beim Schließen der Klappe, nämlich beim Bewegen der Klappe von der Klappen-Ladeposition in die Klappen-Verschlussposition, ist dann eine Kraftübertragung zwischen dem Mitnehmer und insbesondere dem Hebelelement im Bereich angrenzend an den der Koppelstange zugewandten Endbereich des Langlochs ermöglicht. Beim Öffnen der Klappe, nämlich beim Bewegen der Klappe von der Klappen-Verschlussposition in die Klappen-Ladeposition, ist eine Kraftübertragung zwischen dem Mitnehmer und insbesondere dem Hebelelement im Bereich angrenzend an den der Koppelstange abgewandten Endbereich des Langlochs ermöglicht. Vorzugsweise ist der Mitnehmer zylindrisch ausgeführt. Weiter bevorzugt weist das Langloch in den Endbereichen eine der Größe des Mitnehmers angepasste Form auf, so dass eine großflächige Abstützung zwischen dem Mitnehmer und insbesondere dem Hebelelement ermöglicht ist.

Gemäß einer weiteren, besonders bevorzugten Ausführungsform des Verschlusssystems ist ein Rückstellfeder-Element derart mit der Klappe, dem Getriebemechanismus und/oder dem Aktuator gekoppelt, dass das Rückstellfeder-Element vorgespannt ist, wenn die Klappe in ihrer Klappen-Ladeposition positioniert ist. Die Klappe ist somit von ihrer Klappen-Ladeposition in ihre Verschlussposition durch die von dem Rückstellfeder-Element auf die Klappe, den Getriebemechanismus und/oder den Aktuator wirkende Federkraft bewegbar. Somit sind auch Aktuatoren nutzbar, welche nur in eine Richtung eine Kraft bzw. ein Drehmoment erzeugen können. Zur Bewegung in entgegengesetzter Richtung dient dann das Rückstellfeder-Element. Mittels des Rückstellfeder-Elements kann die Klappe in Schließrichtung bewegt und somit verschlossen werden. Bei Verwendung von elektrischen Aktuatoren werden diese dann nur zum Öffnen der Klappe und Halten der Klappe in der Klappen-Ladeposition bestromt. Im stromlosen Zustand solcher elektrischen Aktuatoren wird die Klappe dann mittels des Rückstellfeder-Elements in ihre Klappen-Verschlussposition bewegt oder dort gehalten.

Es kann vorteilhaft sein, wenn der Anschlag an einem Gehäuse des Aktuators angeordnet und/oder mittels des Gehäuses des Aktuators ausgebildet ist. Somit kann auf einfache Art und Weise eine ausreichende Stabilität des Anschlages erreicht werden. Insbesondere bei Ausbildung des Anschlages mittels des Gehäuses kann die notwendige Bauteilanzahl des Verschlusssystems verringert und dessen Montage vereinfacht werden.

Die der Erfindung zugrundeliegende Aufgabe wird auch durch ein Ladesystem für elektrische Speicher nach Anspruch 8 gelöst, nämlich durch ein Ladesystem für elektrische Speicher, insbesondere für Akkumulatoren von Elektrofahrzeugen, mit einem Bordsteinelement, mit einem Ladesteckerteil und mit einem im Vorhinein beschriebenen Verschlusssystem, wobei das Ladesteckerteil in einem Hohlraum des Bordsteinelementes angeordnet ist, wobei der Hohlraum zumindest eine Öffnung aufweist, wobei die Öffnung mittels der Klappe durch Positionierung der Klappe in ihrer Klappen-Verschlussposition verschließbar ist, wobei ein bestimmter freier Öffnungsquerschnitt der Öffnung realisiert ist, wenn die Klappe in ihrer Klappen-Ladeposition positioniert ist.

Mittels der Klappe kann die Robustheit des Ladesystems gegenüber Umwelteinflüssen erhöht werden. Der Hohlraum des Bordsteinelementes ist durch die in ihrer Klappen-Verschlussposition angeordnete Klappe insbesondere gegenüber dem Eindringen vom Wasser oder Schmutz geschützt, so dass die Funktion des Ladesteckerteils sichergestellt werden kann.

Das Ladesystem weist vorzugsweise weitere in dem Hohlraum angeordnete Komponenten, wie eine Steuer- und/oder Regelungseinrichtung und eine Benutzerschnittstelle auf. Der Aktuator ist vorzugsweise mit der Steuer- und/oder Regelungseinrichtung verbunden und mit dieser steuer- und/oder regelbar. Die Steuer- und/oder Regelungseinrichtung ist vorzugsweise mit der Benutzerschnittstelle verbunden. Über die Benutzerschnittstelle kann sich ein Benutzer für einen gewünschten Ladevorgang z.B. via RFID, QR-Code oder Betreiber-App authentifizieren, woraufhin die Klappe aufgrund eines Signals von der Steuer- und/oder Regelungseinrichtung an den Aktuator von der Klappen-Verschlussposition in die Klappen-Ladeposition bewegt wird.

Vorteilhafterweise weist das Bordsteinelement einen Anschlagbereich auf, wobei die in ihrer Klappen-Verschlussposition positionierte Klappe das Bordsteinelement in dem Anschlagbereich kontaktiert. Insbesondere wirkt zwischen der Klappe und dem Bordsteinelement in dem Anschlagbereich eine von dem Rückstell-Federelement aufgebrachte Federkraft. Durch den Anschlagbereich ist ein Hineinbewegen der Klappe in den Hohlraum vermieden. Es können somit bevorzugterweise Fahrzeuge und Personen mittels des Bordsteinelementes inklusive der in ihrer Klappen-Verschlussposition positionierten Klappe abgestützt werden. Ein Befahren oder Begehen des Bordsteinelementes inklusive der in ihrer Klappen-Verschlussposition positionierten Klappe ist ermöglicht.

Vorzugsweise liegen eine dem Hohlraum abgewandte Oberseite der Klappe und eine der Klappe benachbarte Oberfläche des Bordsteinelements in einer Ebene, wenn die Klappe in ihrer Klappen-Verschlussposition positioniert ist. Somit entstehen keine Kanten oder Vorsprünge, so dass das Befahren oder Begehen des Bordsteinelementes inklusive der in ihrer Klappen-Verschlussposition positionierten Klappe besonders komfortabel, insbesondere ohne Hindernisse bzw. Stolperfallen, möglich ist.

Mittels solcher Bordsteinelemente können dann konventionelle Bordsteinelemente ohne Ladefunktion ersetzt, bzw. auch mit weiteren vorzugsweise konventionellen Bordsteilelementen entsprechende Borsteinkanten gebildet werden. Die hier gezeigten Bordsteinelemente mit Ladefunktion kommen insbesondere benachbart zu Parkplätzen, wie Straßenparkplätzen, Kunden- und Mitarbeiterparkplätzen und/oder P&R-Parkplätzen zum Einsatz.

Es gibt nun eine Vielzahl von Möglichkeiten, das erfindungsgemäße Verschlusssystem für ein Ladesteckerteil und das erfindungsgemäße Ladesystem für elektrische Speicher in vorteilhafter Art und Weise auszugestalten und weiterzubilden. Es darf hierzu zunächst auf die dem Patentanspruch 1 und die dem Patentanspruch 8 nachgeordneten Patentansprüche verwiesen werden. Im Folgenden werden nun bevorzugte Ausgestaltungen des erfindungsgemäßen Verschlusssystems für ein Ladesteckerteil und des erfindungsgemäßen Ladesystems für elektrische Speicher anhand der Zeichnung und der dazugehörigen Beschreibung näher erläutert bzw. beschrieben. In der Zeichnung zeigt:

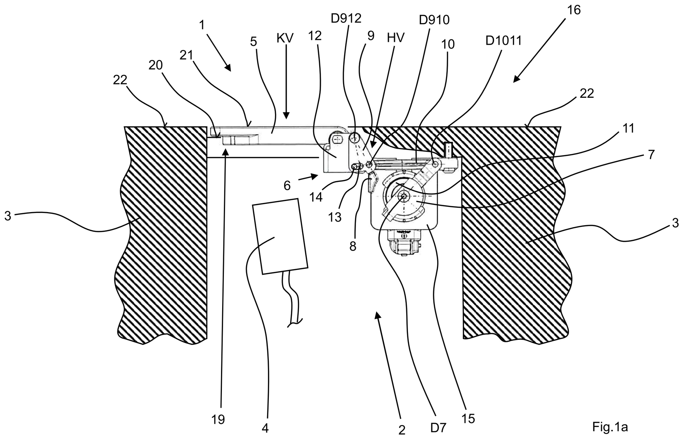

- Fig.1a: in schematischer Darstellung ein Ausführungsbeispiel des Ladesystems für elektrische Speicher mit einem Ausführungsbeispiel eines Verschlusssystems mit einer Klappe des Verschlusssystems in deren Klappen-Verschlussposition und mit einem Hebelelement des Verschlusssystems in dessen Hebelelement-Verschlussposition in einer Seitenansicht zum Teil im Schnitt,

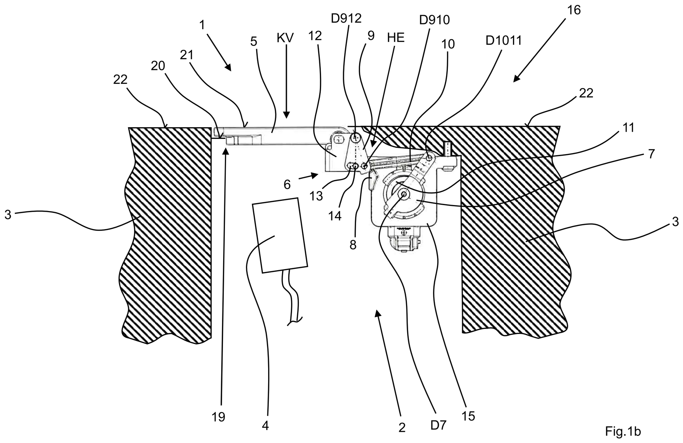

- Fig.1b: in schematischer Darstellung das Ausführungsbeispiel des Ladesystems aus Fig.1a mit der Klappe in deren Klappen-Verschlussposition und mit dem Hebelelement in dessen Hebelelement-Entriegelungsposition in einer Seitenansicht zum Teil im Schnitt, und

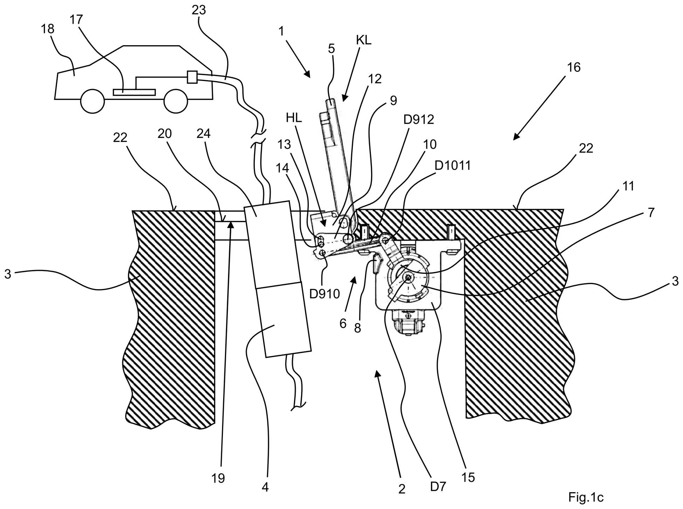

- Fig.1c: in schematischer Darstellung das Ausführungsbeispiel des Ladesystems aus Fig.1a während eines Ladevorganges eines Elektrofahrzeugs mit der Klappe in deren Klappen-Ladeposition und mit dem Hebelelement in dessen Hebelelement-Ladeposition in einer Seitenansicht zum Teil im Schnitt.

Fig.1a, Fig.1b und Fig.1c zeigen jeweils ein Verschlusssystem 1 für ein, insbesondere in einem Hohlraum 2 eines Bordsteinelementes 3 angeordnetes und/oder anordenbares, Ladesteckerteil 4, mit einer Klappe 5, einem Getriebemechanismus 6 und einem Aktuator 7. Die Klappe 5 ist mittels des Getriebemechanismus 6 mit dem Aktuator 7 derart gekoppelt, dass die Klappe 5 mittels des Aktuators 7 gemäß Fig.1c in einer Klappen-Ladeposition KL und gemäß Fig.1a und Fig.1b in einer Klappen-Verschlussposition KV positionierbar ist.

Es ist ein Anschlag 8 vorhanden. Die Klappe 5, der Getriebemechanismus 6 und/oder der Aktuator 7 ist durch Positionierung der Klappe 5 in der Klappen-Verschlussposition KV mittels des Aktuators 7 durch den Anschlag 8 blockierbar. Somit ist die Klappe 5 in ihrer Klappen-Verschlussposition KV sicherbar. Der Getriebemechanismus 6 weist ein Hebelelement 9 auf. Das Hebelelement 9 ist gemäß Fig.1a in einer Hebelelement-Verschlussposition HV, gemäß Fig.1b in einer Hebelelement-Entriegelungsposition HE und gemäß Fig.1c in einer Hebelelement-Ladeposition HL mittels des Aktuators 7 positionierbar. Das Hebelelement 9 ist durch den Anschlag 8 blockiert und somit ist die Klappe 5 in ihrer Klappen-Verschlussposition KV gesichert, wenn das Hebelelement 9 gemäß Fig.1a mittels des Aktuators 7 in der Hebelelement-Verschlussposition HV positioniert ist. Das Hebelelement 9 ist gegenüber dem Anschlag 8 freigegeben und die Klappe 5 ist in ihrer Klappen-Verschlussposition KV positioniert, wenn das Hebelelement 9 gemäß Fig.1b mittels des Aktuators 7 in der Hebelelement-Entriegelungsposition HE positioniert ist. Die Klappe 5 ist in ihrer Klappen-Ladeposition KL positioniert, wenn das Hebelelement 9 gemäß Fig.1c mittels des Aktuators 7 in der Hebelelement-Ladeposition HL positioniert ist.

Das Hebelelement 9 ist vorzugsweise in einer, gemäß Fig.1a, Fig.1b und Fig.1c parallel zur Blattebene liegenden, Bewegungsebene, insbesondere translatorisch und rotatorisch, bewegbar, wobei dann der Anschlag 8 diese Bewegungsebene durchdringt. Der Anschlag 8 ist als fest angeordneter Vorsprung ausgebildet. Ein unbefugtes, manuelles Öffnen der Klappe 5 von außen wird somit durch die Positionierung des Hebelelementes 9 in der Hebelelement-Verschlussposition HV blockiert, nämlich durch entsprechende Abstützung des Hebelelementes 9 an dem Anschlag 8. Es ist denkbar, dass zwischen dem in der Hebelelement-Verschlussposition HV angeordneten Hebelelement 9 und dem Anschlag 8 ein Spalt ausgebildet ist, spätestens aber bei dem Versuch des unbefugten, manuellen Öffnens der Klappe 5 wird ein Kontakt zwischen dem Hebelelement 9 und dem Anschlag 8 erzeugt. Vorzugsweise aber ist zwischen dem in der Hebelelement-Verschlussposition HV angeordneten Hebelelement 9 und dem Anschlag 8 ein Kontakt ausgebildet, auch wenn keine Kraft aufgrund eines unbefugten, manuellen Öffnens der Klappe 5 auf die Klappe 5 wirkt.

Der Getriebemechanismus 6 weist eine Koppelstange 10 auf. Das Hebelelement 9 ist mit der Koppelstange 10 in einem ersten Endbereich der Koppelstange 10 unter Ausbildung einer Drehachse D910 drehbar verbunden. Die Koppelstange 10 ist in einem zweiten, dem ersten gegenüberliegenden Endbereich mit dem Aktuator 7 verbunden. Die Drehachse D910 ist mittels eines Drehgelenkes oder mittels eines Kugelgelenkes ausgebildet, wobei bei Verwendung eines Kugelgelenkes vorteilhafterweise aufgrund von Fertigungstoleranzen auftretende Schiefstellungen der Koppelstange 10 und/oder des Hebelelementes 9 ausgleichbar sind.

Ein Rotor 11 des, insbesondere als Elektromotor ausgeführten, Aktuators 7 ist um eine Drehachse D7 des Aktuators 7 herum drehbar. Die Koppelstange 10 ist in dem zweiten Endbereich exzentrisch zur Drehachse D7 des Aktuators 7 mit dem Rotor 11 unter Ausbildung einer Drehachse D1011 drehbar verbunden. Der Rotor 11 weist einen senkrecht von der Drehachse D7 auskragenden Bereich, insbesondere einen entsprechenden Arm auf, an dessen Ende die Koppelstange 10 mit dem Rotor 11 drehbar verbunden ist. Auch die Drehachse D1011 ist mittels eines Drehgelenkes oder mittels eines Kugelgelenkes ausgebildet.

Ein Hebelarm-Element 12 ist mittels der Klappe 5 ausgebildet und/oder mit der Klappe 5 verbunden. Das Hebelarm-Element 12 ist unter Ausbildung einer Drehachse D912 drehbar mit dem Hebelelement 9 verbunden. Auch die Drehachse D912 ist mittels eines Drehgelenkes oder mittels eines Kugelgelenkes ausgebildet. Ein Langloch 13 ist in dem Hebelarm-Element oder wie Fig.1a bis Fig.1c zeigt in dem Hebelelement 9 ausgebildet. Ein an dem anderen dieser beiden Elemente, nämlich insbesondere wie Fig.1a bis Fig.1c zeigt, ein an dem Hebelarm-Element 12 angeordneter Mitnehmer 14, greift in das Langloch 13 ein.

Die Drehachsen D7, D910, D1011 und D912 liegen im Wesentlichen parallel zueinander. Die Drehachsen D7, D910, D1011 und D912 liegen weiterhin im Wesentlichen senkrecht zur Bewegungsebene. Mit im Wesentlichen ist dabei gemeint, dass um bis zu 5°, insbesondere bis zu 3°, von der parallelen bzw. senkrechten Anordnung abgewichen werden kann. Ein Ausgleich solcher Schiefstellungen ist z.B. mit den oben genannten Kugelgelenken ermöglicht. Zwischen den Drehachsen D7 und D1011 ist ein bestimmter Abstand durch die konstruktive Ausgestaltung des Rotors 11 ausgebildet. Zwischen den Drehachsen D1011 und D910 ist ein bestimmter Abstand durch die konstruktive Ausgestaltung der Koppelstange 10 ausgebildet. Zwischen den Drehachsen D910 und D912 ist ein bestimmter Abstand durch die konstruktive Ausgestaltung des Hebelelements 9 ausgebildet.

Der Mitnehmer 14 ist in einem der Koppelstange 10 abgewandten Endbereich des Langlochs 13 angeordnet, wenn das Hebelelement 9 gemäß Fig.1a in der Hebelelement-Verschlussposition HV positioniert ist. Der Mitnehmer 14 ist in einem der Koppelstange 10 zugewandten Endbereich des Langlochs 13 angeordnet, wenn das Hebelelement 9 gemäß Fig.1b in der Hebelelement-Entriegelungsposition HE positioniert ist. Der Mitnehmer 14 ist auch in einem der Koppelstange 10 zugewandten Endbereich des Langlochs 13 angeordnet, wenn das Hebelelement 9 gemäß Fig.1c in der Hebelelement-Ladeposition HL positioniert ist. Der Mitnehmer 14 ist vorzugsweise zylindrisch ausgeführt. Das Hebelelement 9 ist vorzugsweise plattenförmig ausgeführt. Die Längsseiten des Langlochs 13 liegen vorzugsweise parallel zueinander. Die Längsseiten des Langlochs 13 sind vorzugsweise gebogen ausgebildet, insbesondere wobei sich jeweils ein Radius zwischen der jeweiligen Längsseite und der Drehachse D912 ausbildet.

Ein hier nicht gezeigtes Rückstellfeder-Element ist derart mit der Klappe 5, dem Getriebemechanismus 6 und/oder dem Aktuator 7 gekoppelt, dass das Rückstellfeder-Element vorgespannt ist, wenn die Klappe 5 in ihrer Klappen-Ladeposition KL positioniert ist. Die Klappe 5 ist von ihrer Klappen-Ladeposition KL in ihre Klappen-Verschlussposition KV durch die von dem Rückstellfeder-Element auf die Klappe 5, den Getriebemechanismus 6 und/oder den Aktuator 7 wirkende Federkraft bewegbar. Das Rückstellfeder-Element könnte zum Beispiel als Drehfeder ausgeführt sein, welche die Drehachse D7 des Aktuators 7 umschließt. Das Rückstellfeder-Element könnte auch als Drehfeder ausgeführt sein, welche die Drehachse D910 zwischen dem Hebelelement 9 und der Koppelstange 10 umschließt. Andere Ausführungen des Rückstellfeder-Elements sind denkbar. Z.B. könnten auch Schraubenfedern und/oder Blattfedern zur Ausbildung des Rückstellfeder-Elementes vorgesehen sein. Es ist aber auch denkbar, dass kein Rückstellfeder-Element vorgesehen ist und die Klappe 5 allein mittels des Aktuators 7 zwischen ihrer Klappen-Ladeposition KL und ihrer Klappen-Verschlussposition KV bewegt wird. Aber auch wenn das Rückstellfeder-Element vorhanden ist, ist der Aktuator 7 mit für die Bewegung der Klappe 5 von ihrer Klappen-Ladeposition KL in ihre Klappen-Verschlussposition KV mitverantwortlich, nämlich u.a. durch entsprechende Führung bzw. im Extremfall auch unter Realisierung einer Bremswirkung.

Der Anschlag 8 ist an einem Gehäuse 15 des Aktuators 7 angeordnet und/oder mittels des Gehäuses 15 des Aktuators 7 ausgebildet. Der Anschlag 8 könnte auch fest mit dem Gehäuse 15 verbunden sein. Der Anschlag 8 kragt in Richtung der Drehachsen D7, D910, D1011 und D912 von dem Gehäuse aus.

Es ist denkbar das Verschlusssystem 1 ein Spiel aufweist, sodass eine Rotation der Klappe 5 in der Klappen-Verschlussposition KV um maximal 5°, insbesondere um maximal 3°, ermöglicht ist. Trotz dieser Rotation wird dann von einer Anordnung der Klappe 5 in der Klappen-Verschlussposition KV gesprochen. Das Spiel könnte z.B. zumindest in einem der genannten Gelenke vorhanden sein.

Fig.1a, Fig.1b und Fig.1c zeigen jeweils auch das Ladesystem 16 für elektrische Speicher 17, insbesondere für Akkumulatoren von Elektrofahrzeugen 18, u.a. mit einem Bordsteinelement 3, mit einem Ladesteckerteil 4 und mit dem Verschlusssystem 1. Das Ladesteckerteil 4 ist in dem Hohlraum 2 des Bordsteinelementes 3 angeordnet. Der Hohlraum 2 weist zumindest eine Öffnung 19 auf. Die Öffnung 19 ist mittels der Klappe 5 durch Positionierung der Klappe 5 in ihrer Klappen-Verschlussposition KV verschließbar. Ein bestimmter freier Öffnungsquerschnitt der Öffnung 19 ist realisiert, wenn die Klappe 5 gemäß Fig.1c in ihrer Klappen-Ladeposition KL positioniert ist.

Solche Bordsteinelemente 3 dienen mit weiteren konventionellen Bordsteinelementen ohne Ladefunktion dazu eine Borsteinkante auszubilden. Solche Borsteinkanten dienen auch der Begrenzung von Parkplätzen für Kraftfahrzeuge 18. Das hier gezeigte Bordsteinelement 3 ist insbesondere neben solchen Parkplätzen anordenbar, so dass der elektrischer Speicher 17 des Kraftfahrzeugs 18 aufgeladen werden kann, wenn das Kraftfahrzeug 18 auf diesem Parkplatz steht.

Das Bordsteinelement 3 weist einen Anschlagbereich 20 auf. Die gemäß Fig.1a und Fig.1b in ihrer Klappen-Verschlussposition KV positionierte Klappe 5 kontaktiert das Bordsteinelement 3 in dem Anschlagbereich 20, insbesondere wenn eine Kraft von außen auf die Klappe 5 wirkt. Eine Weitere Rotation der Klappe 5 in Richtung des Hohlraumes 2 ist durch den Anschlagbereich 20 vermieden.

Eine dem Hohlraum 2 abgewandte Oberseite 21 der Klappe 5 und eine der Klappe 5 benachbarte Oberfläche 22 des Bordsteinelementes 3 liegen in einer Ebene, wenn die Klappe 5 gemäß Fig.1a und Fig.1b in ihrer Klappen-Verschlussposition KV positioniert ist. Der Anschlagbereich 20 weist einen bestimmten Abstand zur Oberfläche 22 des Bordsteinelementes 3 auf. Dieser Abstand entspricht vorzugsweise der Dicke der Klappe 5 in dem für den Kontakt mit dem Anschlagbereich 20 vorgesehenen Bereich der Klappe 5. Der Anschlagbereich 20 und die Oberfläche 22 des Bordsteinelementes 3 liegen vorzugsweise parallel zueinander.

Der Aktuator 7 ist vorzugsweise dazu ausgebildet, seine Lage, insbesondere den Drehwinkel in welchem der Rotor 11 des Aktuators sich befindet, als Signal zur Verfügung zu stellen. Somit ist eine Lagerückmeldung des Aktuators 7 realisiert. Diese Lagerückmeldung kann für weitere logische Funktionen verwendet bzw. entsprechend verknüpft werden. Z.B. ist der Aktuator 7 mit einer Steuerungs- und/oder Regelungseinrichtung des Ladesystems 16 verbunden, wobei dann in der Steuerungs- und/oder Regelungseinrichtung das Signal der Lage des Aktuators 7 zu dessen Steuerung und/oder Regelung vorliegt.

Im Folgenden wird nun ein Ladevorgang eines Elektrofahrzeuges 18 beschrieben. Ein Fahrer des Elektrofahrzeuges 18 park zunächst neben dem Bordsteinelement 3. Nach einer Autorisierung durch den Fahrer wird die Klappe 5 aus ihrer Klappen-Verschlussposition KV in ihre Klappen-Ladeposition KL bewegt. Dann verbindet der Fahrer ein Ladekabel 23 zum einen mit dem Elektrofahrzeug 18 und zum anderen mit dem Ladesteckerteil 4 in dem Bordsteinelement 3. Dabei erzeugt der Fahrer eine elektrische Verbindung zwischen einem Steckerteil 24 des Ladekabels 23 und dem Ladesteckerteil 4. Das Ladesteckerteil 4 ist vorzugsweise als weibliches Steckerteil und somit als Buchse ausgeführt. Das Steckerteil 24 des Ladekabels 23 ist vorzugsweise als männliches Steckerteil und somit als Stecker ausgeführt. Dann erfolgt ein Laden des elektrischen Speichers 17 des Elektrofahrzeugs 18. Nach oder zum Beenden dieses Ladens trennt der Fahrer die Steckverbindung zwischen dem Ladesteckerteil 4 und dem Steckerteil 24 des Ladekabels 23. Wenn das Steckerteil 24 des Ladekabels 23 komplett aus dem Hohlraum 2 entfernt wurde, wird die Klappe 5 von ihrer Klappen-Ladeposition KL zurück in ihre Klappen-Verschlussposition KV bewegt.

### Bezugszeichenliste

- 1: Verschlusssystem
- 2: Hohlraum
- 3: Bordsteinelement
- 4: Ladesteckerteil
- 5: Klappe
- 6: Getriebemechanismus
- 7: Aktuator
- 8: Anschlag
- 9: Hebelelement
- 10: Koppelstange
- 11: Rotor
- 12: Hebelarm-Element
- 13: Langloch
- 14: Mitnehmer
- 15: Gehäuse des Aktuators 7
- 16: Ladesystem
- 17: elektrischer Speicher
- 18: Elektrofahrzeug
- 19: Öffnung
- 20: Anschlagbereich
- 21: Oberseite der Klappe 5
- 22: Oberfläche des Bordsteinelementes 3
- 23: Ladekabel
- 24: Steckerteil des Ladekabels 23

- KL: Klappen-Ladeposition
- KV: Klappen-Verschlussposition
- HV: Hebelelement-Verschlussposition
- HE: Hebelelement-Entriegelungsposition
- HL: Hebelelement-Ladeposition
- D7: Drehachse des Aktuators 7
- D910: Drehachse zwischen dem Hebelelement 9 und der Koppelstange 10
- D1011: Drehachse zwischen der Koppelstange 10 und dem Rotor 11
- D912: Drehachse zwischen dem Hebelelement 9 und dem Hebelarm-Element 12

## Patentansprüche

1. Verschlusssystem (1) für ein, insbesondere in einem Hohlraum (2) eines Bordsteinelementes (3) angeordnetes und/oder anordenbares, Ladesteckerteil (4), mit einer Klappe (5), einem Getriebemechanismus (6) und einem Aktuator (7), wobei die Klappe (5) mittels des Getriebemechanismus (6) mit dem Aktuator (7) derart gekoppelt ist, dass die Klappe (5) mittels des Aktuators (7) in einer Klappen-Ladeposition (KL) und einer Klappen-Verschlussposition (KV) positionierbar ist, **dadurch gekennzeichnet, dass** ein Anschlag (8) vorhanden ist, wobei die Klappe (5), der Getriebemechanismus (6) und/oder der Aktuator (7) durch Positionierung der Klappe (5) in der Klappen-Verschlussposition (KV) mittels des Aktuators (7) durch den Anschlag (8) blockierbar und somit die Klappe (5) in ihrer Klappen-Verschlussposition (KV) sicherbar ist, wobei der Getriebemechanismus (6) ein Hebelelement (9) aufweist, wobei das Hebelelement (9) in einer Hebelelement-Verschlussposition (HV), in einer Hebelelement-Entriegelungsposition (HE) und in einer Hebelelement-Ladeposition (HL) mittels des Aktuators (7) positionierbar ist,
- wobei das Hebelelement (9) durch den Anschlag (8) blockiert und somit die Klappe (5) in ihrer Klappen-Verschlussposition (KV) gesichert ist, wenn das Hebelelement (9) mittels des Aktuators (7) in der Hebelelement-Verschlussposition (HV) positioniert ist,
- wobei das Hebelelement (9) gegenüber dem Anschlag (8) freigegeben und wobei die Klappe (5) in ihrer Klappen-Verschlussposition (KV) positioniert ist, wenn das Hebelelement (9) mittels des Aktuators (7) in der Hebelelement-Entriegelungsposition (HE) positioniert ist,
- wobei die Klappe (5) in ihrer Klappen-Ladeposition (KL) positioniert ist, wenn das Hebelelement (9) mittels des Aktuators (7) in der Hebelelement-Ladeposition (HL) positioniert ist.

2. Verschlusssystem (1) nach Anspruch 1, **dadurch gekennzeichnet, dass** der Getriebemechanismus (6) eine Koppelstange (10) aufweist, wobei das Hebelelement (9) mit der Koppelstange (10) in einem ersten Endbereich der Koppelstange (10) unter Ausbildung einer Drehachse (D910) drehbar verbunden ist, wobei die Koppelstange (10) in einem zweiten, dem ersten gegenüberliegenden Endbereich mit dem Aktuator (7) verbunden ist.

3. Verschlusssystem (1) nach Anspruch 2, **dadurch gekennzeichnet, dass** ein Rotor (11) des, insbesondere als Elektromotor ausgeführten, Aktuators (7) um eine Drehachse (D7) des Aktuators (7) herum drehbar ist, wobei die Koppelstange (10) in dem zweiten Endbereich exzentrisch zur Drehachse (D7) des Aktuators (7) mit dem Rotor (11) unter Ausbildung einer Drehachse (D1011) drehbar verbunden ist.

4. Verschlusssystem (1) nach Anspruch 1, 2 oder 3, **dadurch gekennzeichnet, dass** ein Hebelarm-Element (12) mittels der Klappe (5) ausgebildet und/oder mit der Klappe (5) verbunden ist, wobei das Hebelarm-Element (12) unter Ausbildung einer Drehachse (D912) drehbar mit dem Hebelelement (9) verbunden ist, wobei ein Langloch (13) in dem Hebelarm-Element oder dem Hebelelement (9) ausgebildet ist, wobei ein an dem anderen dieser beiden Elemente (12) angeordneter Mitnehmer (14) in das Langloch (13) eingreift.

5. Verschlusssystem (1) nach Anspruch 4, **dadurch gekennzeichnet, dass** der Mitnehmer (14) in einem der Koppelstange (10) abgewandten Endbereich des Langlochs (13) angeordnet ist, wenn das Hebelelement (9) in der Hebelelement-Verschlussposition (HV) positioniert ist, wobei der Mitnehmer (14) in einem der Koppelstange (10) zugewandten Endbereich des Langlochs (13) angeordnet ist, wenn das Hebelelement (9) in der Hebelelement-Entriegelungsposition (HE) positioniert ist.

6. Verschlusssystem (1) nach einem der vorangehenden Ansprüche, **dadurch gekennzeichnet, dass** ein Rückstellfeder-Element derart mit der Klappe (5), dem Getriebemechanismus (6) und/oder dem Aktuator (7) gekoppelt ist, dass das Rückstellfeder-Element vorgespannt ist, wenn die Klappe (5) in ihrer Klappen-Ladeposition (KL) positioniert ist, wobei die Klappe (5) von ihrer Klappen-Ladeposition (KL) in ihre Klappen-Verschlussposition (KV) durch die von dem Rückstellfeder-Element auf die Klappe (5), den Getriebemechanismus (6) und/oder den Aktuator (7) wirkende Federkraft bewegbar ist.

7. Verschlusssystem (1) nach einem der vorangehenden Ansprüche, **dadurch gekennzeichnet, dass** der Anschlag (8) an einem Gehäuse (15) des Aktuators (7) angeordnet und/oder mittels des Gehäuses (15) des Aktuators (7) ausgebildet ist.

8. Ladesystem (16) für elektrische Speicher (17), insbesondere für Akkumulatoren von Elektrofahrzeugen (18), mit einem Bordsteinelement (3), mit einem Ladesteckerteil (4) und mit einem Verschlusssystem (1) nach einem der Ansprüche 1 bis 7, wobei das Ladesteckerteil (4) in einem Hohlraum (2) des Bordsteinelementes (3) angeordnet ist, wobei der Hohlraum (2) zumindest eine Öffnung (19) aufweist, wobei die Öffnung (19) mittels der Klappe (5) durch Positionierung der Klappe (5) in ihrer Klappen-Verschlussposition (KV) verschließbar ist, wobei ein bestimmter freier Öffnungsquerschnitt der Öffnung (19) realisiert ist, wenn die Klappe (5) in ihrer Klappen-Ladeposition (KL) positioniert ist.

9. Ladesystem (16) nach Anspruch 8, **dadurch gekennzeichnet, dass** das Bordsteinelement (3) einen Anschlagbereich (20) aufweist, wobei die in ihrer Klappen-Verschlussposition (KV) positionierte Klappe (5) das Bordsteinelement (3) in dem Anschlagbereich (20) kontaktiert.

10. Ladesystem (16) nach Anspruch 8 oder 9, **dadurch gekennzeichnet, dass** eine dem Hohlraum (2) abgewandte Oberseite (21) der Klappe (5) und eine der Klappe (5) benachbarte Oberfläche (22) des Bordsteinelementes (3) in einer Ebene liegen, wenn die Klappe (5) in ihrer Klappen-Verschlussposition (KV) positioniert ist.
